# EUROPEAN PATENT SPECIFICATION

(11) **EP 4 494 898 B1**
(45) Date of publication and mention of the grant of the patent: **11.03.2026**
(21) Application number: 24187015.3
(22) Date of filing: 08.07.2024
(51) Int. Cl.: B60C 9/22, B60C 11/03, B60C 11/11

(54) **PNEUMATIC TIRE**
LUFTREIFEN
PNEUMATIQUE

(30) Priority: 19.07.2023 JP 2023117322
(43) Date of publication of application: 22.01.2025
(73) Proprietor: Sumitomo Rubber Industries, Ltd., Kobe-shi, Hyogo 651-0072 (JP)
(72) Inventor: YAMAGUCHI, Saori, Kobe-shi, 651-0072 (JP)
(74) Representative: Manitz Finsterwald Patent- und Rechtsanwaltspartnerschaft mbB

(56) References cited:
- EP-A1- 0 738 616
- EP-A1- 2 077 192
- EP-A2- 0 414 470
- JP-A- 2006 327 298
- JP-A- H11 291 713
- US-A- 4 293 019
- US-A1- 2012 267 019

## Description

### BACKGROUND OF THE INVENTION

### Field of the Invention

The present invention relates to a pneumatic tire.

### Background Art

Block pattern tires having blocks demarcated by a plurality of circumferential main grooves and a plurality of lateral grooves, have been known. Block pattern tires mounted to drive shafts are required to have life performance and drive performance. Increasing the groove depths of the circumferential main grooves and the lateral grooves is effective for improving life performance and drive performance. In particular, increasing the groove depths of the circumferential main grooves and the lateral grooves located on the inner side in the tire width direction effectively contributes to improvement of life performance and drive performance.

The outer diameter of the tread of a tire grows due to centrifugal force caused by running (hereinafter referred to simply as "outer diameter growth"). When the groove depths in the tread are increased, the groove opening due to outer diameter growth increases. Therefore, during running, the groove wall side of each block comes in contact with the ground more frequently. As a result, chipping of the groove wall of the block or uneven wear such as heel- and-toe wear may occur.

A technique to improve uneven wear resistance by providing tie bars, which connect blocks, to grooves to increase the stiffness of each block, has been known. However, when the tie bars are provided, the volumes of the grooves are decreased, so that grip performance on a wet road surface (hereinafter referred to simply as "wet performance") is decreased. In addition, due to the increase in the stiffness of each block, drive performance is decreased.

International Publication No. WO2013-042257 discloses a pneumatic tire that includes a belt layer including a circumferential reinforcing layer, a plurality of circumferential main grooves, and a plurality of lug grooves (lateral grooves), in which blocks on the circumferential reinforcing layer have sipes, and that can have improved uneven wear resistance.

EP 2 077 192 A1 discloses a pneumatic tire according to the preamble of claim 1. Other related tires are disclosed, for example, in JP 2006-327298 A, EP 0 414 470 A2, JP H11-291713 A, US 2012/0267019 A1, EP 0 738 616 A1, and US 4,293,019 A.

The present invention has been made in view of the above circumstances, and an object of the present invention is to provide a pneumatic tire that can suppress a decrease in uneven wear resistance and wet performance and block chipping while improving life performance and drive performance.

### SUMMARY OF THE INVENTION

A pneumatic tire according to an aspect of the present invention includes: a tread; and a band located inward of the tread in a tire radial direction and including a helically wound band cord. The tread has a plurality of circumferential grooves, a plurality of lateral grooves, and blocks demarcated by the circumferential grooves and the lateral grooves. The circumferential grooves include a pair of shoulder circumferential grooves, and a pair of crown circumferential grooves located inward of the shoulder circumferential grooves in a tire width direction. The lateral grooves include crown lateral grooves each providing communication between the pair of crown circumferential grooves, and middle lateral grooves each providing communication between the shoulder circumferential groove and the crown circumferential groove. The blocks include crown blocks each demarcated by the crown circumferential grooves and the crown lateral grooves, and middle blocks each demarcated by the crown circumferential groove, the shoulder circumferential groove, and the middle lateral grooves. Groove depths of the crown circumferential grooves and groove depths of the crown lateral grooves are equal to each other. The band is present at least on an inner side of the crown lateral grooves in the tire radial direction.

Preferably, in the pneumatic tire, the band is present at least on the inner side of the crown blocks in the tire radial direction.

Preferably, in the pneumatic tire, the groove depths of the crown circumferential grooves and groove depths of the middle lateral grooves are equal to each other, and the band is present at least on the inner side of the middle lateral grooves in the tire radial direction.

Preferably, in the pneumatic tire, the band is present at least on the inner side of the middle blocks in the tire radial direction.

In the pneumatic tire, the groove depths of the crown circumferential grooves, groove depths of the shoulder circumferential grooves, and the groove depths of the middle lateral grooves are equal to each other, and each outer edge in the tire width direction of the band is located at least inward in the tire radial direction of an outermost side in the tire width direction of the shoulder circumferential grooves.

In the pneumatic tire, the band cord, of the band, present on the inner side of the crown lateral grooves in the tire radial direction has a first cord density, the band cord, of the band, present on the inner side in the tire radial direction from the outermost side in the tire width direction of the shoulder circumferential grooves to the outer edge in the tire width direction of the band has a second cord density, and the first cord density is higher than the second cord density.

Preferably, in the pneumatic tire, the band has a boundary between the first cord density and the second cord density in the tire width direction.

Preferably, in the pneumatic tire, the boundary is located inward of the middle blocks in the tire radial direction.

Preferably, in the pneumatic tire, the boundary is located inward of the middle lateral grooves in the tire radial direction.

Preferably, in the pneumatic tire, the first cord density is not less than 1.2 times and not greater than 2 times the second cord density.

Preferably, in the pneumatic tire, the groove depths of the crown lateral grooves are not less than 15 mm and not greater than 30 mm.

Preferably, in the pneumatic tire, a number of the crown lateral grooves present on a ground-contact surface of the tread when the tread comes into contact with a ground is not less than three and not greater than seven.

Preferably, in the pneumatic tire, the lateral grooves further include shoulder lateral grooves each providing communication between the shoulder circumferential groove and an outermost side in the tire width direction of the tread, and
a radius R of a groove bottom of each of the shoulder lateral grooves is not less than 2.5 mm.

Preferably, in the pneumatic tire, the pneumatic tire has an aspect ratio of not greater than 65%.

Preferably, in the pneumatic tire, the crown lateral grooves each have a groove bottom projection.

Preferably, the pneumatic tire is a heavy duty pneumatic tire

According to the present invention, a pneumatic tire that can suppress a decrease in uneven wear resistance and wet performance and block chipping while improving life performance and drive performance, is obtained.

### BRIEF DESCRIPTION OF THE DRAWINGS

FIG. 1 is a cross-sectional view showing a part of a pneumatic tire not forming part of the present invention;
FIG. 2 is a development view showing a part of a tread surface of the tire in FIG. 1;
FIG. 3 is a cross-sectional view showing a part of the tire in FIG. 1;
FIG. 4 is a cross-sectional view of a crown lateral groove;
FIG. 5 is a cross-sectional view of a middle lateral groove;
FIG. 6 is a cross-sectional view of a tread portion of a pneumatic tire according to the present invention; and
FIG. 7 is a development view showing a part of a tread surface of the tire in FIG. 6.

### DETAILED DESCRIPTION

Hereinafter, the present invention will be described in detail based on preferred embodiments with appropriate reference to the drawings.

In the present invention, a state where a tire is fitted on a standardized rim, the internal pressure of the tire is adjusted to a standardized internal pressure, and no load is applied to the tire is referred to as standardized state. In addition, unless otherwise specified, the description is based on the tire in a state where no wear due to running has occurred.

In the present invention, unless otherwise specified, the dimensions and angles of each component of the tire are measured in the standardized state. The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that includes a tread having a surface that comes into contact with a road surface. The tread surface is a surface where the tread comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

In the present invention, a crosslinked rubber refers to a molded product, of a rubber composition, obtained by pressurizing and heating the rubber composition. The rubber composition is an uncrosslinked rubber obtained by mixing a base rubber and chemicals in a kneading machine such as a Banbury mixer. The crosslinked rubber is also referred to as vulcanized rubber, and the rubber composition is also referred to as unvulcanized rubber.

Examples of the base rubber include natural rubber (NR), butadiene rubber (BR), styrene-butadiene rubber (SBR), isoprene rubber (IR), ethylene-propylene rubber (EPDM), chloroprene rubber (CR), acrylonitrile-butadiene rubber (NBR), and isobutylene-isoprene-rubber (IIR). Examples of the chemicals include reinforcing agents such as carbon black and silica, plasticizers such as aromatic oil, fillers such as zinc oxide, lubricants such as stearic acid, antioxidants, processing aids, sulfur, and vulcanization accelerators. Selection of a base rubber and chemicals, the amounts of the selected chemicals, etc., are determined as appropriate according to the specifications of components, such as a tread and a sidewall, for which the rubber composition is used.

In the present invention, the number of cross-sections of cords (number of cords) included per 5 cm width of a tire component including aligned cords is represented as the density of cords included in this component (unit: ends/5 cm). Unless otherwise specified, the density of the cords is obtained in a cross-section of the component obtained by cutting the component along a plane perpendicular to the longitudinal direction of the cords.

The aspect ratio of the tire is the ratio of the cross-sectional height to the cross-sectional width of the tire obtained in the standardized state (see JATMA or the like).

In the present invention, a groove depth is represented by the distance from a line segment connecting the opening edges of the groove to the groove bottom. A groove width is the shortest length of the line segment connecting the opening edges of the groove.

### [Basic Configuration of Pneumatic Tire

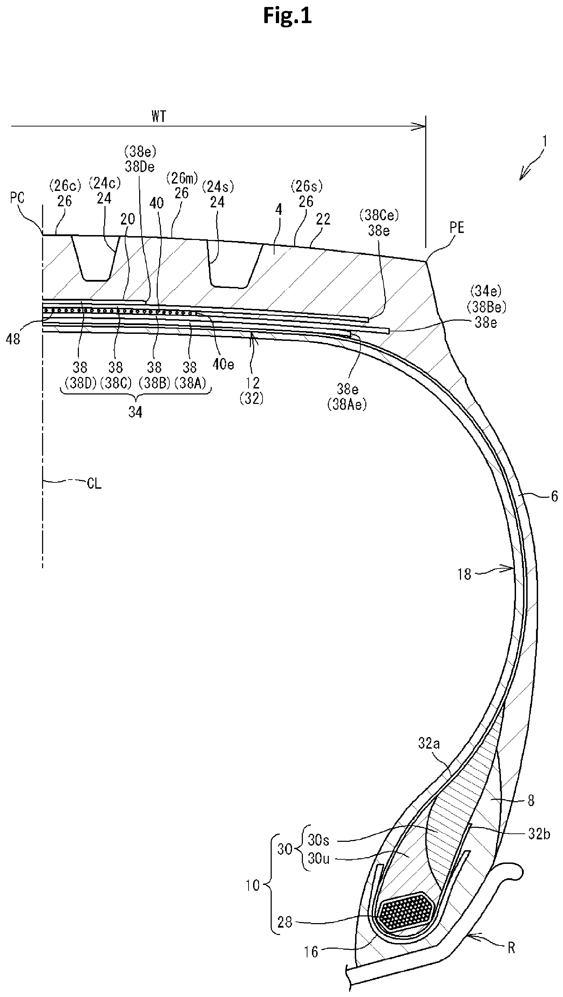

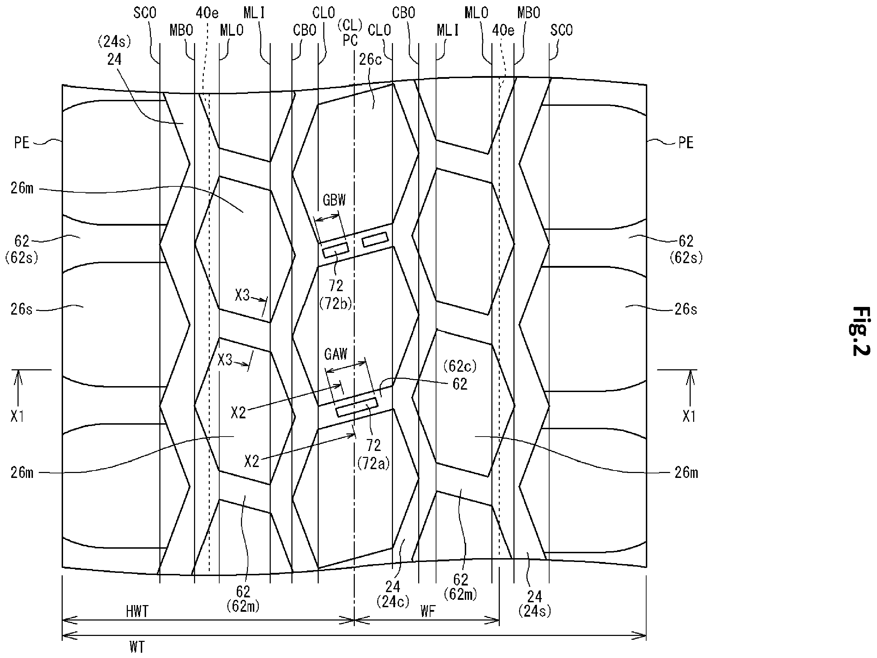

FIG. 1 is a cross-sectional view showing a part of a pneumatic tire 1 (hereinafter sometimes referred to simply as "tire 1") which does not form part of the present invention. FIG. 2 is a development view showing a part of a tread surface of the tire 1. The tire 1 is mounted to a vehicle such as a truck and a bus. The tire 1 is a heavy duty pneumatic tire.

FIG. 1 shows a part of a cross-section of the tire 1 taken along a plane including the rotation axis of the tire 1 (hereinafter sometimes referred to simply as "meridian cross-section"). In FIG. 1, the right-left direction is the width direction of the tire 1 (hereinafter sometimes referred to simply as "tire width direction"), and the up-down direction is the radial direction of the tire 1 (hereinafter sometimes referred to simply as "tire radial direction"). The direction perpendicular to the surface of the drawing sheet of FIG. 1 is the circumferential direction of the tire 1 (hereinafter sometimes referred to simply as "tire circumferential direction"). An alternate long and short dash line CL represents the equator plane of the tire 1. The equator plane CL is located at the center of the tread 4 in the tire width direction.

The tire 1 is fitted onto a rim R. The rim R is a standardized rim. The interior of the tire 1 is filled with air to adjust the internal pressure of the tire 1. The tire 1 fitted on the rim R is also referred to as a tire-rim assembly. The tire-rim assembly includes the rim R and the tire 1 fitted on the rim R.

The tire 1 includes a tread 4, a pair of sidewalls 6, a pair of chafers 8, a pair of beads 10, a carcass 12, a pair of steel reinforcing layers 16, an inner liner 18, and a reinforcing portion 20.

The tread 4 comes into contact with a road surface at a tread surface 22 thereof. In other words, the tread 4 includes the tread surface 22 which comes into contact with a road surface. In FIG. 1, reference character PC indicates the equator of the tire 1, which is the point of intersection of the tread surface 22 and the equator plane CL. The equator PC is located on the outermost side of the tire 1 in the tire radial direction. In FIG. 1, reference character PE indicates an outer edge in the tire width direction of the tread surface 22. A length indicated by a double-headed arrow WT is the width of the tread surface 22. The width WT of the tread surface 22 is the distance in the tire width direction from one outer edge PE to the other outer edge PE of the tread surface 22.

Although not shown, the tread 4 can include a base portion and a cap portion located outward of the base portion in the tire radial direction. In this case, the base portion and the cap portion are each formed from a crosslinked rubber. The cap portion is formed from a crosslinked rubber for which wear resistance, low temperature characteristics, and grip performance are taken into consideration.

As described later, the tread 4 has a plurality of circumferential grooves 24, a plurality of lateral grooves 62, and a plurality of blocks 26 demarcated by the circumferential grooves 24 and the lateral grooves 62. FIG. 1 shows a crown circumferential groove 24c and a shoulder circumferential groove 24s which are the circumferential grooves 24. FIG. 1 also shows a crown block 26c, a middle block 26m, and a shoulder block 26s which are the blocks 26.

Each sidewall 6 is connected to an end of the tread 4. The sidewall 6 extends inward in the tire radial direction from the end of the tread 4. The sidewall 6 is located inward of the tread 4 in the tire radial direction. The sidewall 6 is formed from a crosslinked rubber for which cut resistance is taken into consideration.

Each chafer 8 is located inward of the sidewall 6 in the tire radial direction. The chafer 8 comes into contact with the rim R. The chafer 8 is formed from a crosslinked rubber for which wear resistance is taken into consideration.

Each bead 10 is located inward of the chafer 8 in the tire width direction. The bead 10 is located inward of the sidewall 6 in the tire radial direction. The bead 10 includes a core 28 and an apex 30.

The core 28 extends in the tire circumferential direction. The core 28 includes a wound wire made of steel. The core 28 has a substantially hexagonal cross-sectional shape.

The apex 30 is located outward of the core 28 in the tire radial direction. The apex 30 includes an inner apex 30u and an outer apex 30s. The inner apex 30u extends outward in the tire radial direction from the core 28. The outer apex 30s is located outward of the inner apex 30u in the tire radial direction. The inner apex 30u is formed from a hard crosslinked rubber. The outer apex 30s is formed from a crosslinked rubber that is more flexible than the inner apex 30u.

The carcass 12 is located inward of the tread 4, the pair of sidewalls 6, and the pair of chafers 8. The carcass 12 extends on and between a first bead 10 and a second bead 10 out of the pair of beads 10.

The carcass 12 includes at least one carcass ply 32. The carcass 12 of the tire 1 is composed of one carcass ply 32. The carcass ply 32 is turned up around each core 28 from the inner side toward the outer side in the tire width direction. The carcass ply 32 includes a ply body 32a which extends on and between a first core 28 and a second core 28, and a pair of turned-up portions 32b which are connected to the ply body 32a and turned up around the respective cores 28 from the inner side toward the outer side in the tire width direction.

The carcass ply 32 includes a large number of carcass cords aligned with each other, which are not shown. These carcass cords are covered with a topping rubber. Each carcass cord intersects the equator plane CL. In the tire 1, an angle of the carcass cord with respect to the equator plane CL (hereinafter referred to as intersection angle of the carcass cord) is not less than 70° and not greater than 90°. The carcass 12 has a radial structure. The carcass cords of the tire 1 are steel cords.

Each steel reinforcing layer 16 is located at a bead portion. The steel reinforcing layer 16 is turned up around the core 28 from the inner side toward the outer side in the tire width direction along the carcass ply 32. The steel reinforcing layer 16 includes a large number of filler cords aligned with each other, which are not shown. These filler cords are covered with a topping rubber. Steel cords are used as the filler cords.

The inner liner 18 is located inward of the carcass 12. The inner liner 18 is joined to the inner surface of the carcass 12 via an insulation (not shown) formed from a crosslinked rubber. The inner liner 18 forms an inner surface of the tire 1. The inner liner 18 is formed from a crosslinked rubber that has an excellent air blocking property. The inner liner 18 maintains the internal pressure of the tire 1.

The reinforcing portion 20 is located inward of the tread 4 in the tire radial direction. In the tire radial direction, the reinforcing portion 20 is located between the tread 4 and the carcass 12. The reinforcing portion 20 includes a belt 34 and a band 40.

The belt 34 includes four belt plies 38. These belt plies 38 are aligned in the tire radial direction. Each belt ply 38 is placed such that both ends 38e thereof are opposed to each other across the equator plane CL. Each belt ply 38 intersects the equator plane CL. The ends 38e of each belt ply 38 are located on both sides of the equator plane CL.

The four belt plies 38 are a first belt ply 38A, a second belt ply 38B, a third belt ply 38C, and a fourth belt ply 38D. Among the four belt plies 38, the belt ply 38 located on the inner side in the tire radial direction is the first belt ply 38A. The second belt ply 38B is located outward of the first belt ply 38A in the tire radial direction. The third belt ply 38C is located outward of the second belt ply 38B in the tire radial direction. The fourth belt ply 38D is located outward of the third belt ply 38C in the tire radial direction. The fourth belt ply 38D is the belt ply 38 located on the outer side in the tire radial direction among the four belt plies 38. In the tire 1, the number of belt plies 38 may be three or more.

As shown in FIG. 1, an end 38Ae of the first belt ply 38A, an end 38Be of the second belt ply 38B, and an end 38Ce of the third belt ply 38C are located outward of the shoulder circumferential groove 24s in the tire width direction. On the other hand, an end 38De of the fourth belt ply 38D is located inward of the shoulder circumferential groove 24s in the tire width direction. From the viewpoint of damage prevention, the fourth belt ply 38D is placed such that the end 38De of the fourth belt ply 38D does not overlap the shoulder circumferential groove 24s in the tire radial direction.

In this tire 1, the second belt ply 38B has a widest width, and the fourth belt ply 38D has a narrowest width. The end 38Ae of the first belt ply 38A and the end 38Ce of the third belt ply 38C are located between the end 38Be of the second belt ply 38B and the end 38De of the fourth belt ply 38D in the tire width direction.

The width of each belt ply 38 is the distance in the tire width direction from a first end 38e to a second end 38e of the belt ply 38.

The band 40 is a jointless band including a helically wound band cord 48. The band cord 48 is covered with a topping rubber 50 (not shown). The band 40 is a full band placed such that outer edges 40e thereof are opposed to each other across the equator plane CL. The band 40 intersects the equator plane CL. The outer edges 40e of the band 40 are located on both sides of the equator plane CL. Each outer edge 40e of the band 40 is located inward of the shoulder circumferential groove 24s in the tire width direction. Each outer edge 40e of the band 40 is located outward of the fourth belt ply 38D in the tire width direction.

### [Basic Configuration of Tread]

FIG. 2 is a development view showing a part of the tread surface 22 of the tire 1 in FIG. 1. As described above, the tread 4 of the tire 1 has the plurality of circumferential grooves 24, the plurality of lateral grooves 62, and the plurality of blocks 26 demarcated by the circumferential grooves 24 and the lateral grooves 62. FIG. 1 is an X1-X1 cross-sectional view of FIG. 2.

In FIG. 2, the right-left direction is the tire width direction, and the up-down direction is the tire circumferential direction. The direction perpendicular to the surface of the drawing sheet of FIG. 2 is the tire radial direction. In FIG. 2, the position of each outer edge 40e of the band 40 is indicated by a dotted line. A length indicated by reference character WF is the distance in the tire width direction from the equator plane CL to the outer edge 40e of the band 40. In FIG. 2, a double-headed arrow HWT indicates the distance in the tire width direction from the equator plane CL to the outer edge PE of the tread surface 22. The length indicated by the double-headed arrow HWT is half the width of the tread surface 22.

The tread 4 of the tire 1 has four circumferential grooves 24. The four circumferential grooves 24 are aligned in the tire width direction and extend continuously in the tire circumferential direction. Among these circumferential grooves 24, the circumferential groove 24 located on each outer side in the tire width direction is a shoulder circumferential groove 24s. The circumferential groove 24 located inward of the shoulder circumferential groove 24s in the tire width direction is a crown circumferential groove 24c. The four circumferential grooves 24 of the tire 1 include a pair of crown circumferential grooves 24c and a pair of shoulder circumferential grooves 24s.

The tread 4 of the tire 1 has the plurality of lateral grooves 62 aligned in the tire circumferential direction. The plurality of lateral grooves 62 include a plurality of crown lateral grooves 62c, a plurality of middle lateral grooves 62m, and a plurality of shoulder lateral grooves 62s. Each crown lateral groove 62c provides communication between the pair of crown circumferential grooves 24c. Each middle lateral groove 62m provides communication between the shoulder circumferential groove 24s and the crown circumferential groove 24c. Each shoulder lateral groove 62s provides communication between the shoulder circumferential groove 24s and the outermost side of the tread 4 in the tire width direction.

Each crown lateral groove 62c has a groove bottom projection 72 at a groove bottom thereof. The groove bottom projection 72 suppresses opening of the crown lateral groove 62c due to outer diameter growth. Accordingly, a decrease in the uneven wear resistance of the tire 1 and block chipping are suppressed. In addition, when opening of the crown lateral groove 62c is suppressed, stones may be more likely to be trapped in the crown lateral groove 62c. The groove bottom projection 72 functions as a stone ejector. Therefore, the anti-stone trapping performance of the tire 1 is improved.

One groove bottom projection 72 (groove bottom projection 72a) is provided in one of the crown lateral grooves 62c adjacent to each other in the tire circumferential direction, and two groove bottom projections 72 (groove bottom projections 72b) are provided in the other of the crown lateral grooves 62c. A length GAW of the groove bottom projection 72a shown in FIG. 2 is longer than a length GBW of each groove bottom projection 72b. Therefore, the groove bottom projection 72a can suppress opening of the crown lateral groove 62c more than the groove bottom projection 72b. On the other hand, the length GBW of each groove bottom projection 72b is shorter than the length GAW of the groove bottom projection 72a. Therefore, the groove bottom projection 72b can suppress a decrease in the drive performance of the tire 1 more than the groove bottom projection 72a. Since the groove bottom projection 72a and the groove bottom projections 72b are alternately arranged in the tire circumferential direction, a decrease in the uneven wear resistance of the tire 1, block chipping in the tire 1, and a decrease in the drive performance of the tire 1 can be suppressed in a well-balanced manner.

The tread 4 of the tire 1 has the plurality of blocks 26 demarcated by the circumferential grooves 24 and the lateral grooves 62. The plurality of blocks 26 include a plurality of crown blocks 26c, a plurality of middle blocks 26m, and a plurality of shoulder blocks 26s. Each crown block 26c is a block 26 demarcated by the crown circumferential grooves 24c and the crown lateral grooves 62c. Each middle block 26m is a block 26 demarcated by the crown circumferential groove 24c, the shoulder circumferential groove 24s, and the middle lateral grooves 62m. Each shoulder block 26s is a block 26 demarcated by the shoulder circumferential groove 24s and the shoulder lateral grooves 62s.

In FIG. 2, each reference character CLO indicates the position on the outermost side in the tire width direction of the crown lateral groove 62c. Each reference character CBO indicates the position on the outermost side in the tire width direction of the crown block 26c. Each reference character ML1 indicates the positions on the innermost side in the tire width direction of the middle lateral grooves 62m. Each reference character MLO indicates the positions on the outermost side in the tire width direction of the middle lateral groove 62m. Each reference character MBO indicates the positions of the middle blocks 26m on the outermost side in the tire width direction. Each reference character SCO indicates the positions on the outermost side in the tire width direction of the shoulder circumferential grooves 24s. The tire 1 is formed such that as shown in FIG. 2, the position CLO, the position CBO, the position MLI, the position MLO, the position MBO, and the position SCO are each located substantially on a straight line in the tire circumferential direction.

As shown in FIG. 2, the tread 4 of the tire 1 is formed such that each crown circumferential groove 24c extends in a zigzag manner in the tire circumferential direction between the position CLO and position MLI. In addition, the tread 4 of the tire 1 is formed such that each shoulder circumferential groove 24s extends in a zigzag manner in the tire circumferential direction between the position MLO and the position SCO.

### [Configurations of Circumferential Grooves, Lateral Grooves, and Blocks]

Among the lateral grooves 62, the crown lateral grooves 62c and the middle lateral grooves 62m are formed so as to be inclined with respect to the tire width direction of the tire 1. The inclination angle of each crown lateral groove 62c with respect to the tire width direction is not less than 3° and not greater than 15°. The inclination angle of each middle lateral groove 62m with respect to the tire width direction is not less than 3° and not greater than 15°. The groove width of the crown lateral groove 62c is substantially the same in the communication region of the pair of crown circumferential grooves 24c. The groove width of the middle lateral groove 62m is substantially the same in the communication region of the shoulder circumferential groove 24s and the crown circumferential groove 24c.

Meanwhile, the shoulder lateral grooves 62s are formed so as to extend in the tire width direction of the tire 1. In addition, the groove width of each shoulder lateral groove 62s is formed so as to widen near the outermost side of the tread 4 in the tire width direction. Accordingly, the drainage performance of the tire 1 is improved.

The tire 1 is formed such that the intervals of the shoulder lateral groove 62s, the intervals of the middle lateral groove 62m, and the intervals of the crown lateral groove 62c along the tire circumferential direction are substantially the same. In addition, the formation positions of the shoulder lateral grooves 62s and the formation positions of the crown lateral grooves 62c coincide with each other. Meanwhile, the formation positions of the middle lateral grooves 62m are displaced relative to the formation positions of the shoulder lateral grooves 62s and the formation positions of the crown lateral grooves 62c. The fact that the formation positions of the lateral grooves 62 coincide with each other means that at least a part of one lateral groove 62 and at least a part of another lateral groove 62 overlap each other in the tire width direction. In addition, the fact that the formation positions of the lateral grooves 62 are displaced relative to each other means that one lateral groove 62 and another lateral groove 62 do not overlap each other at all in the tire width direction.

In the tire 1, in the tire circumferential direction, the formation position on the innermost side in the tire width direction of each middle lateral groove 62m is located substantially at the midpoint between the formation positions on the outermost side in the tire width direction of the crown lateral grooves 62c adjacent to each other in the tire circumferential direction. Also, in the tire circumferential direction, the formation position on the outermost side in the tire width direction of each middle lateral groove 62m is located substantially at the midpoint between the formation positions on the innermost side in the tire width direction of the shoulder lateral grooves 62s adjacent to each other in the tire circumferential direction.

Each crown circumferential groove 24c is formed in a zigzag shape in the region between the position CLO and the position MLI with substantially the same groove width. In addition, each crown circumferential groove 24c is formed such that the innermost side in the tire width direction of the crown circumferential groove 24c coincides with the outermost side in the tire width direction of the crown lateral grooves 62c. Furthermore, each crown circumferential groove 24c is formed such that the outermost side in the tire width direction of the crown circumferential groove 24c coincides with the innermost side in the tire width direction of the middle lateral grooves 62m. That is, each crown circumferential groove 24c is formed so as to be inclined with respect to the tire circumferential direction between the outermost side in the tire width direction of the crown lateral grooves 62c and the innermost side in the tire width direction of the middle lateral grooves 62m.

Each shoulder circumferential groove 24s is formed in a zigzag shape in the region between the position MLO and the position SCO with substantially the same groove width. In addition, each shoulder circumferential groove 24s is formed such that the innermost side in the tire width direction of the shoulder circumferential groove 24s coincides with the outermost side in the tire width direction of the middle lateral grooves 62m. Furthermore, each shoulder circumferential groove 24s is formed such that the outermost side in the tire width direction of the shoulder circumferential groove 24s is connected to the innermost side in the tire width direction of the shoulder lateral grooves 62s. That is, each shoulder circumferential groove 24s is formed so as to be inclined with respect to the tire circumferential direction between the outermost side in the tire width direction of the middle lateral grooves 62m and the innermost side in the tire width direction of the shoulder lateral grooves 62s.

In the tire 1, the intervals of the crown lateral grooves 62c are set such that the number of crown lateral grooves 62c present on the tread surface 22 in contact with the ground when the tread 4 comes into contact with the ground is not less than three and not greater than seven. If the number of crown lateral grooves 62c is not less than three, the drive performance of the tire 1 is improved. If the number of crown lateral grooves 62c is not greater than seven, the band 40 can sufficiently suppress opening of the crown lateral grooves 62c due to the outer diameter growth. Accordingly, a decrease in the uneven wear resistance of the tire 1 and block chipping are suppressed.

As described above, in the tire 1, the intervals of the middle lateral grooves 62m and the intervals of the shoulder lateral grooves 62s are substantially the same as the intervals of the crown lateral grooves 62c. Thus, as with the crown lateral grooves 62c, the number of middle lateral grooves 62m and the number of shoulder lateral grooves 62s that are present on the tread surface 22 in contact with the ground when the tread 4 comes into contact with the ground are also set so as to be not less than three and not greater than seven. If the number of middle lateral grooves 62m is not less than three, the drive performance of the tire 1 is further improved. If the number of middle lateral grooves 62m is not greater than seven, a decrease in the uneven wear resistance of the tire 1 and block chipping are further suppressed.

Each shoulder block 26s is a block 26 located on the outermost side in the tire width direction. Each middle block 26m is a block 26 located inward of the shoulder block 26s in the tire width direction. Each crown block 26c is a block 26 located inward of the middle block 26m in the tire width direction. The shoulder block 26s includes the outer edge PE of the tread surface 22. The blocks 26 of the tire 1 include one crown block 26c, a pair of middle blocks 26m, and a pair of shoulder blocks 26s in the tire width direction. In the tire width direction, the crown block 26c and the middle blocks 26m are separated by the crown circumferential grooves 24c. In the tire width direction, the middle blocks 26m and the shoulder blocks 26s are separated by the shoulder circumferential grooves 24s.

The middle blocks 26m are demarcated by the plurality of middle lateral grooves 62m provided at equal intervals. The crown blocks 26c are demarcated by the plurality of crown lateral grooves 62c provided at equal intervals. The shoulder blocks 26s are demarcated by the plurality of shoulder lateral grooves 62s provided at equal intervals. As shown in FIG. 2, each crown block 26c has a hexagonal shape in the tread surface 22, surrounded by the pair of crown circumferential grooves 24c and the crown lateral grooves 62c. Each middle block 26m has a hexagonal shape in the tread surface 22, surrounded by the crown circumferential groove 24c, the shoulder circumferential groove 24s, and the middle lateral grooves 62m.

### [Configuration of Band]

As described above, the band 40 includes the helically wound band cord 48. The band 40 has a jointless structure. The band 40 is a full band placed such that the outer edge 40e thereof are opposed to each other across the equator plane CL. In the tire 1, the band 40 is located between the second belt ply 38B and the third belt ply 38C in the tire radial direction. In the tire width direction, each outer edge 40e of the band 40 is located inward of the end 38Be of the second belt ply 38B, and is located inward of the end 38Ce of the third belt ply 38C.

The region of a tread portion where the band 40 is present in the tire radial direction is constrained by the reinforcing portion 20 including the band 40. Thus, the outer diameter growth is suppressed in the above region. In the band 40, an angle of the band cord 48 with respect to the circumferential direction is preferably not greater than 5° and more preferably not greater than 2°. The band cord 48 extends substantially in the circumferential direction.

In the tire 1, the band cord 48 is a metal cord. Specifically, the band cord 48 is a steel cord. The band cord 48 may be a cord made of an organic fiber (hereinafter referred to as organic fiber cord). In this case, examples of the organic fiber include nylon fibers, polyester fibers, rayon fibers, and aramid fibers. From the viewpoint that movement of the tread portion is effectively restricted and a ground-contact surface having a stable shape is obtained, the band cord 48 is preferably a metal cord.

The density of the band cord 48 in the band 40 (hereinafter sometimes referred to simply as "cord density") is preferably not less than 20 ends/5 cm and not greater than 35 ends/5 cm. In the tire 1, the cord density is represented by the number of cross-sections of the band cord 48 included per 5 cm width of the band 40 in the cross-section of the band 40 included in the meridian cross-section. The reinforcing portion 20 may include a plurality of bands. If the cord density is not less than 20 ends/5 cm, the outer diameter growth of the tire 1 can be effectively suppressed. Therefore, opening, of the circumferential grooves 24 and the lateral grooves 62 with respect to which the band 40 is present on the inner side in the tire radial direction, due to the outer diameter growth is suppressed. Accordingly, a decrease in the uneven wear resistance of the tire 1 and block chipping are suppressed. If the cord density is not greater than 35 ends/5 cm, appropriate flexibility of the tread 4 is ensured, so that the drive performance of the tire 1 is maintained.

As shown in FIG. 2, in the tire 1, each outer edge 40e of the band 40 is located between the position MLO and the position MBO. That is, the band 40 is present at least on the inner side of the position CLO, the position CBO, the position MLI, and the position MLO in the tire radial direction. In other words, the band 40 is present at least on the inner side of the crown lateral grooves 62c, the crown blocks 26c, the crown circumferential grooves 24c, and the middle lateral grooves 62m in the tire radial direction.

The outer diameter growth is greatest around the equator plane CL, and decreases toward the outer side in the tire width direction. In the tire 1, the band 40 is present on the inner side of the crown lateral grooves 62c in the tire radial direction on which the outer diameter growth is great. Therefore, opening of the crown lateral grooves 62c is suppressed. Accordingly, a decrease in the uneven wear resistance of the tire 1 and chipping of the crown blocks 26c are suppressed.

In the tire 1, the band 40 is present on the inner side of the crown blocks 26c in the tire radial direction. Therefore, the stiffness of each crown block 26c is improved. Accordingly, a decrease in the uneven wear resistance of the tire 1 and chipping of the crown blocks 26c are further suppressed.

In the tire 1, the band 40 is present on the inner side of the middle lateral grooves 62m in the tire radial direction. Therefore, opening of the middle lateral grooves 62m is suppressed. Accordingly, a decrease in the uneven wear resistance of the tire 1 and chipping of the middle blocks 26m are suppressed.

As shown in FIG. 2, in the tire 1, the band 40 is not present on the inner side in the tire radial direction of a region on the outer side in the tire width direction with respect to each position MBO (hereinafter sometimes referred to simply as "outer region"). That is, in the tire 1, the band 40 is not present on the inner side of the shoulder blocks 26s and the shoulder circumferential grooves 24s in the tire radial direction. Therefore, the outer region of the tire 1 is not constrained by the band 40, so that, in the outer region of the tire 1, the outer diameter easily grows due to the internal pressure. A region on the inner side in the tire width direction with respect to each position MBO is hereinafter sometimes referred to simply as "central region".

Since the tire has a tread radius, the ground-contact pressure on the tread surface 22 is usually highest around the equator plane CL, and decreases toward the outer side in the tire width direction. That is, the ground-contact pressure in the central region is higher than that in the outer region. As described above, in the tire 1, each outer edge 40e of the band 40 is located at least inward of the position MLO in the tire radial direction. Therefore, in the central region of the tire 1, the outer diameter growth is suppressed by the band 40. That is, in the tire 1, the outer diameter growth is likely to occur in the outer region and is less likely to occur in the central region, and thus the difference between the ground-contact pressure in the outer region and the ground-contact pressure in the central region tends to be smaller. As a result, the ground-contact pressure on the tread surface 22 of the tire 1 is more likely to be made uniform. As for the tire, the more uniform the ground-contact pressure on the tread surface is, the less likely it is that uneven wear will occur. Thus, the tire 1 has good uneven wear resistance.

As with the crown lateral grooves 62c, the number of shoulder lateral grooves 62s is set so as to be not less than three and not greater than seven. If the number of shoulder lateral grooves 62s is not less than three, the outer diameter growth in the outer region is ensured. Thus, the uneven wear resistance of the tire 1 is improved. If the number of shoulder lateral grooves 62s is not greater than seven, a decrease in the uneven wear resistance of the tire 1 and block chipping are further suppressed.

### [Various Dimensions, etc.]

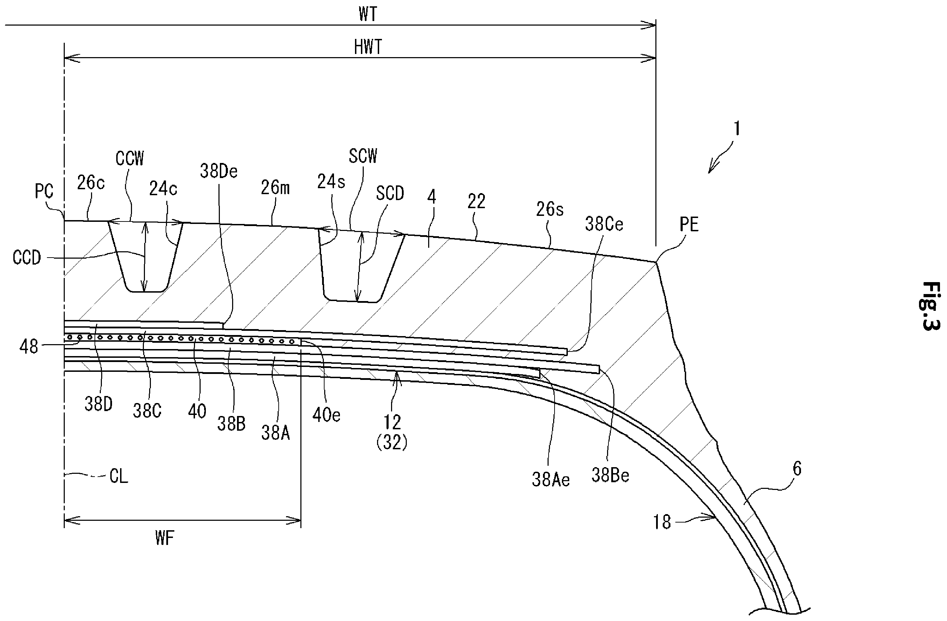

FIG. 3 is a cross-sectional view showing a part of the tire 1 in FIG. 1. FIG. 3 shows the tread portion of the tire 1. Reference character CCD indicates the groove depth of the crown circumferential groove 24c. Reference character CCW indicates the groove width of the crown circumferential groove 24c. Reference character SCD indicates the groove depth of the shoulder circumferential groove 24s. Reference character SCW indicates the groove width of the shoulder circumferential groove 24s.

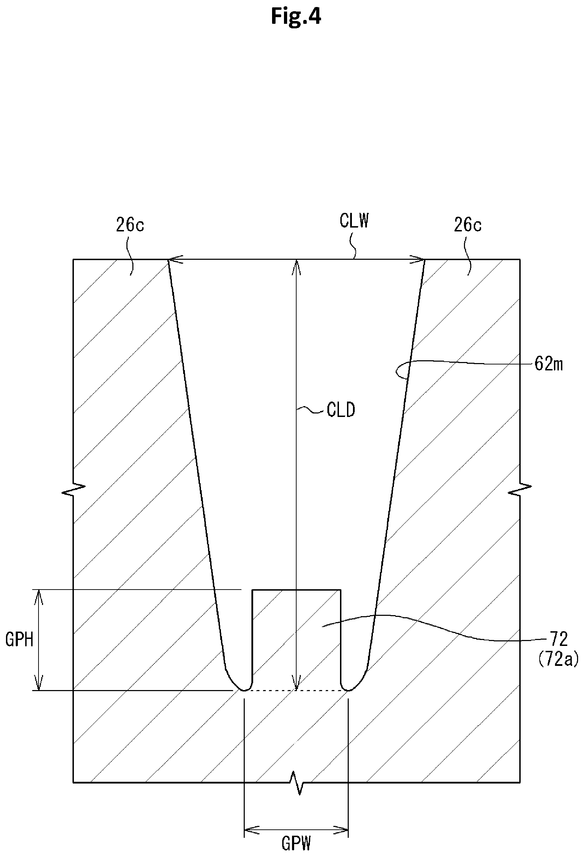

FIG. 4 is a cross-sectional view of the crown lateral groove 62c. FIG. 4 shows a part of an X2-X2 cross-section of the tread 4 of the tire 1 shown in FIG. 2. Reference character CLD indicates the groove depth of the crown lateral groove 62c. Reference character CLW indicates the groove width of the crown lateral groove 62c. Reference character GPH indicates the height of the groove bottom projection 72. Reference character GPW indicates the width of the groove bottom projection 72. The tire 1 is formed such that the heights GPH and the widths GPW of each groove bottom projection 72a and each groove bottom projection 72b are substantially the same.

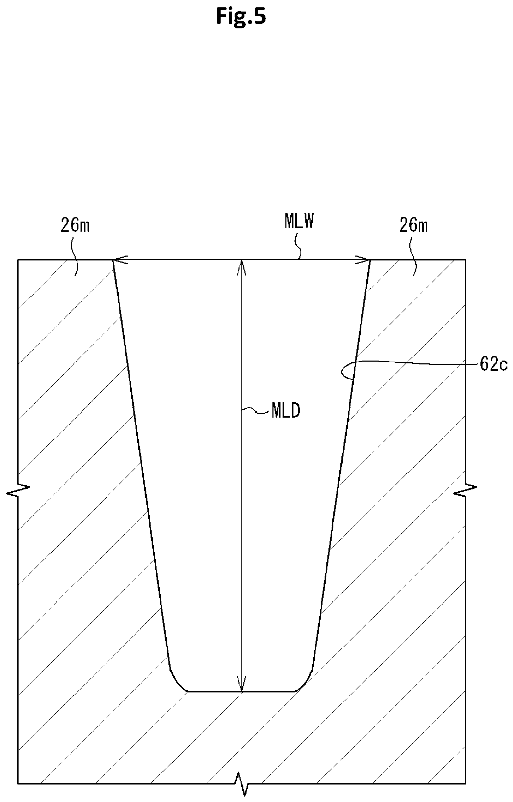

FIG. 5 is a cross-sectional view of the middle lateral groove 62m. FIG. 5 shows a part of an X3-X3 cross-section of the tread 4 of the tire 1 shown in FIG. 2. Reference character MLD indicates the groove depth of the middle lateral groove 62m. Reference character MLW indicates the groove width of the middle lateral groove 62m.

As described above, increasing the groove depths of the circumferential grooves and the lateral grooves of the tire contributes to improvement of life performance, drive performance, and wet performance. In particular, increasing the groove depths of the circumferential grooves and the lateral grooves located in the central region effectively contributes to improvement of life performance, drive performance, and wet performance.

The tire 1 is formed such that the groove depth CCD, the groove depth SCD, the groove depth CLD, and the groove depth MLD are equal to each other. Therefore, the tire 1 can be formed such that the groove depths of the circumferential grooves 24 and the lateral grooves 62 located in the central region are deep. As a result, the tire 1 has excellent life performance, drive performance, and wet performance. In the tire 1, each groove depth is not less than 15 mm and not greater than 30 mm. If each groove depth is not less than 15 mm, the life performance, the drive performance, and the wet performance of the tire 1 are improved. If each groove depth is not greater than 30 mm, excessive outer diameter growth is suppressed, so that the uneven wear resistance, the wet performance, and the block chipping resistance of the tire 1 are ensured.

Here, the fact that the groove depths are equal to each other means that the difference between the groove depths of the circumferential groove 24 and the lateral groove 62 communicating with each other is not less than -5% and not greater than 5% and preferably not less than -3% and not greater than 3%. More specifically, when the groove depth CLD is defined as 100%, the groove depth CCD is not less than 95% and not greater than 105% and preferably not less than 97% and not greater than 103% of the groove depth CLD. When the groove depth MLD is defined as 100%, the groove depth CCD is not less than 95% and not greater than 105% and preferably not less than 97% and not greater than 103% of the groove depth MLD. When the groove depth MLD is defined as 100%, the groove depth SCD is not less than 95% and not greater than 105% and preferably not less than 97% and not greater than 103% of the groove depth MLD.

Here, increasing the groove depths may cause an increase in the outer diameter growth of the tire, which may cause a decrease in uneven wear resistance and block chipping. As described above, the tire 1 is formed such that each outer edge 40e of the band 40 is located inward of the central region in the tire radial direction. That is, in the tire 1, the outer diameter growth in the central region is suppressed by the band 40. Accordingly, a decrease in the uneven wear resistance of the tire 1 and block chipping are suppressed. As a result, the tire 1 can suppress a decrease in uneven wear resistance and wet performance and block chipping while improving life performance and drive performance.

In the tire 1, the groove depth CCD of each crown circumferential groove 24c and the groove depth CLD of each crown lateral groove 62c are equal to each other. Accordingly, the tire 1 can be formed such that the groove depths of each crown circumferential groove 24c and each crown lateral groove 62c are deep. In addition, the tire 1 is formed such that each outer edge 40e of the band 40 is located at least inward of the position CLO in the tire radial direction. That is, the tire 1 is configured such that the band 40 is present on the inner side of the crown lateral grooves 62c in the tire radial direction. Therefore, opening of the crown lateral grooves 62c due to the outer diameter growth is suppressed. Thus, the tire 1 has excellent life performance, drive performance, uneven wear resistance, wet performance, and block chipping resistance.

The tire 1 is formed such that each outer edge 40e of the band 40 is located at least inward of the position CBO in the tire radial direction. That is, the tire 1 is configured such that the band 40 is present on the inner side of the crown blocks 26c in the tire radial direction. Therefore, the stiffness of each crown block 26c is improved. Thus, the tire 1 has more excellent uneven wear resistance, wet performance, and block chipping resistance.

In the tire 1, the groove depth CCD of each crown circumferential groove 24c and the groove depth MLD of each middle lateral groove 62m are equal to each other. Accordingly, the tire 1 can be formed such that the groove depths of each crown circumferential groove 24c and each middle lateral groove 62m are deep. In addition, the tire 1 is formed such that each outer edge 40e of the band 40 is located at least inward of the position MLO in the tire radial direction. That is, the tire 1 is configured such that the band 40 is present on the inner side of the middle lateral grooves 62m in the tire radial direction. Therefore, opening of the middle lateral grooves 62m due to the outer diameter growth is suppressed. Thus, the tire 1 has further excellent life performance, drive performance, uneven wear resistance, wet performance, and block chipping resistance.

In the tire 1, the groove width CCW of each crown circumferential groove 24c is preferably not less than 2% and not greater than 15% of the width WT of the tread surface 22. The groove width SCW of each shoulder circumferential groove 24s is preferably not less than 2% and not greater than 15% of the width WT of the tread surface 22. If the groove width CCW and the groove width SCW are not less than 2% of the width WT, the groove volume is ensured. Accordingly, the wet performance of the tire 1 is improved. If the groove width CCW and the groove width SCW are not greater than 15% of the width WT, the stiffness of the tread 4 is ensured. Accordingly, the life performance of the tire 1 is improved.

In the tire 1, the groove width CLW of each crown lateral groove 62c is preferably not less than 80% and not greater than 120% of the groove width CCW. The groove width MLW of each middle lateral groove 62m is preferably not less than 80% and not greater than 120% of the groove width CCW. If the groove width CLW and the groove width MLW are not less than 80% of the groove width CCW, the groove volume is ensured. Accordingly, the wet performance of the tire 1 is improved. If the groove width CLW and the groove width MLW are not greater than 120% of the groove width CCW, the stiffness of the tread 4 is ensured. Accordingly, the life performance of the tire 1 is improved.

The tire 1 preferably has an aspect ratio of not greater than 65%. If the aspect ratio is not greater than 65%, the force of the internal pressure applied to the entire tread 4 can be sufficiently ensured. Accordingly, the difference between the ground-contact pressure in the outer region and the ground-contact pressure in the central region can be sufficiently reduced. Therefore, the uneven wear resistance of the tire 1 is improved.

The tire 1 is formed such that a radius R of the groove bottom of each shoulder lateral groove 62s is not less than 2.5 mm. When the radius R is set to be not less than 2.5 mm, repeated strain of the bottom portion of the shoulder lateral groove 62s is suppressed. Therefore, the tire 1 suppresses occurrence of tread groove cracking (hereinafter sometimes referred to as "TGC").

The height GPH of each groove bottom projection 72 is preferably not less than 15% and not greater than 50% of the groove depth CLD of the crown lateral groove 62c. The width GPW of each groove bottom projection 72 is preferably not less than 20% and not greater than 60% of the groove width CLW of the crown lateral groove 62c. If the height GPH is not less than 15% of the groove depth CLD and the width GPW is not less than 20% of the groove width CLW, the size of the groove bottom projection 72 is ensured. Accordingly, opening of the crown lateral groove 62c due to the outer diameter growth and stone trapping in the crown lateral groove 62c are suppressed. Therefore, the uneven wear resistance and the anti-stone trapping performance of the tire 1 are improved. If the height GPH is not greater than 50% of the groove depth CLD and the width GPW is not greater than 50% of the groove width CLW, the groove volume of the crown lateral groove 62c is ensured. Therefore, the wet performance of the tire 1 is improved.

In the tire 1, the length WF is preferably not less than 15% and not greater than 85% of the length HWT. If the length WF is not less than 15% of the length HWT, the band 40 can effectively constrain the central region of the tire 1. Accordingly, the uneven wear resistance, the wet performance, and the block chipping resistance of the tire 1 are ensured. If the length WF is not greater than 85% of the length HWT, a state where the outer diameter growth is likely to occur in the outer region of the tire 1 is ensured. Accordingly, the ground-contact pressure on the tread surface 22 of the tire 1 is made uniform, so that the uneven wear resistance of the tire 1 is maintained.

### Embodiment of Pneumatic Tire of Present Invention]

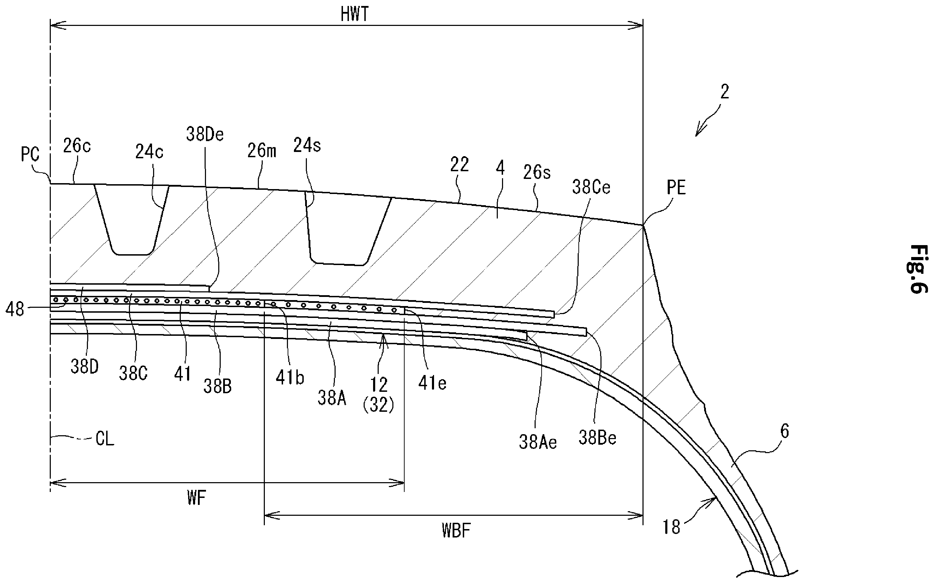

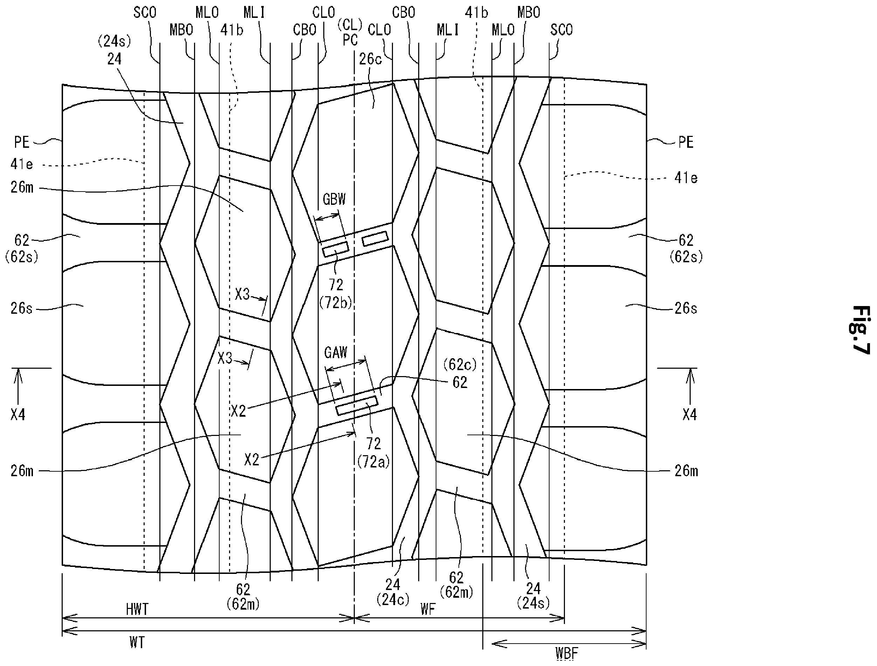

FIG. 6 is a cross-sectional view of a tread portion of a pneumatic tire 2 (hereinafter sometimes referred to simply as "tire 2") according to the present invention. FIG. 7 is a development view showing a part of a tread surface of the tire 2. FIG. 6 shows a tread portion in a meridian cross-section of the tire 2 at a position indicated by X4-X4 in FIG. 7. The tire 2 has the same configuration as the tire 1, except that a band 41 is used instead of the band 40 of the tire 1. As with the band 40, the band 41 is a jointless band. In addition, as with the band 40, the band 41 is a full band.

As shown in FIG. 6, in the tire 2, unlike each outer edge 40e of the tire 1, each outer edge 41e of the band 41 is located inward in the tire radial direction of the shoulder blocks 26s near the shoulder circumferential groove 24s in the tire width direction. That is, the tire 2 is configured such that the band 41 is present at least on the inner side of the crown blocks 26c and the middle blocks 26m in the tire radial direction. Accordingly, the stiffness of each crown block 26c and each middle block 26m is improved. Therefore, the uneven wear resistance, the wet performance, and the block chipping resistance of the tire 2 are improved.

As shown in FIG. 7, unlike each outer edge 40e of the tire 1, each outer edge 41e of the band 41 of the tire 2 is located outward of the position SCO in the tire width direction. That is, the band 40 is present at least on the inner side of the position CLO, the position CBO, the position MLI, the position MLO, the position MBO, and the position SCO in the tire radial direction. In other words, the band 41 is configured to be present at least on the inner side of the crown lateral grooves 62c, the crown blocks 26c, the crown circumferential grooves 24c, the middle lateral grooves 62m, the middle blocks 26m, and the shoulder circumferential grooves 24s in the tire radial direction. In addition, each outer edge 41e of the band 41 is located near the outer side of the position SCO in the tire width direction. Therefore, as described above, the outer diameter growth in the outer region of the tire 2 is ensured. Therefore, the tire 2 has good uneven wear resistance.

The band 41 of the tire 2 is formed such that a cord density on the inner side in the tire width direction (hereinafter sometimes referred to simply as "first cord density") with respect to a boundary 41b shown in FIG. 6 and FIG. 7 is higher than a cord density on the outer side in the tire width direction (hereinafter sometimes referred to simply as "second cord density") with respect to the boundary 41b. In the tire 2, the boundary 41b is located between the position MLI and the position MLO. The higher the cord density of the band is, the larger the force to constrain the tire is. The lower the cord density of the band is, the smaller the force to constrain the tire is. That is, the force to constrain the tire 2 is larger in a region of the band 41 having the first cord density than in a region of the band 41 having the second cord density. In FIG. 6 and FIG. 7, reference character WBF indicates the length in the tire width direction from the boundary 41b to the outer edge PE of the tread surface 22.

The outer diameter growth of the tire is greatest around the equator plane CL, and decreases toward the outer side in the tire width direction. In the tire 2, the band 41 having the first cord density constrains a region on the inner side in the tire width direction with respect to the boundary 41b (hereinafter sometimes referred to simply as "first cord density region"). That is, in the tire 2, in the central region, the first cord density region around the equator plane CL where the outer diameter growth is particularly great is strongly constrained. Accordingly, opening of the circumferential grooves 24 and the lateral grooves 62 located in the first cord density region of the tire 2 is suppressed. In addition, the stiffness of each block 26 located in the first cord density region of the tire 2 is improved. Therefore, the tire 2 has excellent uneven wear resistance and block chipping resistance.

The ground-contact pressure on the tread surface of the tire is highest around the equator plane CL, and decreases toward the outer side in the tire width direction. In the tire 2, the band 41 having the second cord density constrains a region from the boundary 41b to each outer edge 41e (hereinafter sometimes referred to simply as "second cord density region"). In addition, in the tire 2, a region on the outer side in the tire width direction with respect to each outer edge 41e (hereinafter sometimes referred to simply as "shoulder region") is not constrained by the band 41. That is, the tire 2 is configured such that the first cord density region, the second cord density region, and the shoulder region are formed from the equator PC toward each outer edge PE of the tread surface 22 in the tire width direction. That is, the tire 2 is designed such that the constraining force by the band 41 decreases stepwise from the equator PC toward each outer edge PE of the tread surface 22. Accordingly, the ground-contact pressure on the tread surface 22 of the tire 2 is made more uniform. Thus, the tire 2 has excellent uneven wear resistance.

As with the tire 1, the tire 2 is formed such that the groove depth CCD, the groove depth SCD, the groove depth CLD, and the groove depth MLD are equal to each other. Therefore, as with the tire 1, the tire 2 also has excellent life performance, drive performance, and wet performance. The influence of increasing the groove depths of the tire on an increase in outer diameter growth is greatest around the equator plane CL, and decreases toward the outer side in the tire width direction. In the tire 2, each outer edge 41e of the band 41 is located at least inward of the position SCO in the tire radial direction. Accordingly, opening of the circumferential grooves 24 and the lateral grooves 62 located inward of the position SCO in the tire radial direction is suppressed. In addition, the stiffness of each block 26 located inward of the position SCO in the tire radial direction is improved. Furthermore, the tire 2 is designed such that the constraining force by the band 41 decreases stepwise from the equator PC toward each outer edge PE of the tread surface 22 in the tire width direction. Accordingly, in the tire 2, groove opening due to the outer diameter growth is effectively suppressed. In addition, in the tire 2, the stiffness of the blocks 26 is improved in a well-balanced manner. Thus, the tire 2 has excellent life performance, drive performance, uneven wear resistance, wet performance, and block chipping resistance.

It is preferable that the boundary 41b is located at least outward of the position CLO in the tire width direction. In other words, it is preferable that at least the crown lateral grooves 62c are located in the first cord density region. Accordingly, opening of the crown lateral grooves 62c due to the outer diameter growth is suppressed. Therefore, the uneven wear resistance of the tire 2 is improved. In addition, in the tire 2, it is preferable that the band 41 which is present on the inner side in the tire radial direction with respect to the outer side of the position SCO in the tire width direction has the second cord density. Accordingly, the outer diameter growth in the outer region of the tire 2 is ensured. Thus, the tire 2 has excellent uneven wear resistance.

In the tire 2, the length WBF is preferably not less than 20% and not greater than 80% of the length HWT. If the length WBF is not less than 20% of the length HWT, the outer diameter growth in the outer region of the tire 2 is ensured. Thus, the uneven wear resistance of the tire 2 is maintained. If the length WBF is not greater than 80% of the length HWT, the first cord density region is ensured. Thus, the uneven wear resistance, the uneven wear resistance, and the block chipping resistance of the tire 2 are maintained.

It is preferable that the boundary 41b is located inward of the middle blocks 26m in the tire radial direction. In the tire 2, the boundary 41b is located inward of the position MBO in the tire width direction. Accordingly, while the tire 2 ensures the outer diameter growth in the outer region, the band 40 can effectively constrain the central region of the tire 2. Thus, the tire 2 has excellent uneven wear resistance.

It is more preferable that the boundary 41b is located on the inner side of the middle lateral grooves 62m in the tire radial direction. In the tire 2, the boundary 41b is located between the position MLI and the position MLO. Accordingly, while the tire 2 further ensures the outer diameter growth in the outer region, the band 40 can effectively constrain the central region of the tire 2. Thus, the tire 2 has more excellent uneven wear resistance.

As with the band 40 of the tire 1, the first cord density of the tire 2 is preferably not less than 20 ends/5 cm and not greater than 35 ends/5 cm. In addition, the first cord density of the tire 2 is preferably not less than 1.2 times and not greater than 2 times the second cord density. If the first cord density is not less than 1.2 times the second cord density, the difference between the force to constrain the first cord density region and the force to constrain the second cord density region by the band 41 is sufficiently ensured. Accordingly, the ground-contact pressure on the tread surface 22 is effectively made uniform. Thus, the uneven wear resistance of the tire 2 is improved. If the first cord density is not greater than 2 times the second cord density, occurrence of repeated strain and movement of a rib at the boundary 41b are suppressed. Therefore, the TGC resistance, the durability, and the track wear resistance of the tire 2 are improved.

### [Other Modifications]

The tire 1 and the tire 2 have excellent life performance, drive performance, uneven wear resistance, wet performance, and block chipping resistance, and thus are suitable as heavy duty pneumatic tires, especially as heavy duty pneumatic tires to be mounted to drive shafts. However, the present invention is not limited to heavy duty pneumatic tires. For example, the present invention can be applied to tires for a passenger car.

The circumferential grooves 24 of the tire 1 and the tire 2 are formed in a zigzag shape in the tire circumferential direction, but the present invention is not limited thereto. For example, the circumferential grooves of the present invention can be formed in a straight or wavy shape in the tire circumferential direction. In addition, the lateral grooves 62 of the tire 1 and the tire 2 are formed so as to be inclined with respect to the tire width direction, but the present invention is not limited thereto. The lateral grooves of the present invention may be formed parallel to the tire width direction.

In the tire 2 of the present invention, two regions, the first cord density region and the second cord density region, are formed with the boundary 41b of the band 41 as a boundary therebetween, but the present invention is not limited thereto. For example, the band of the present invention may have a plurality of boundaries. In this case, the tire of the present invention may be formed such that the cord density is decreased from the vicinity of the equator plane CL toward the outer side in the tire width direction stepwise at each boundary. More specifically, if a band having two boundaries is used for the tire of the present invention, a first cord density region, a second cord density region, a third cord density region, and a shoulder region can be provided from the vicinity of the equator plane CL toward each outer side in the tire width direction. Accordingly, the force to constrain the tire by the band can be designed to be decreased in four steps. Therefore, it is possible to respond more flexibly to the influence of the outer diameter growth on the tire. Thus, the life performance, the drive performance, the uneven wear resistance, the wet performance, and the block chipping resistance of the tire are improved.

The above-described technology capable of suppressing a decrease in uneven wear resistance and wet performance and block chipping while improving life performance and drive performance, can be applied to various tires.

## Claims

1. A pneumatic tire (1, 2) comprising:
a tread (4); and
a band (41) located inward of the tread (4) in a tire radial direction and including a helically wound band cord, wherein
the tread (4) has a plurality of circumferential grooves (24), a plurality of lateral grooves (62), and blocks (26) demarcated by the circumferential grooves (24) and the lateral grooves (62),
the circumferential grooves (24) include
a pair of shoulder circumferential grooves (24s), and
a pair of crown circumferential grooves (24c) located inward of the shoulder circumferential grooves (24s) in a tire width direction,
the lateral grooves (62) include
crown lateral grooves (62c) each providing communication between the pair of crown circumferential grooves (24c), and
middle lateral grooves (62m) each providing communication between the shoulder circumferential groove (24s) and the crown circumferential groove (24c),
the blocks (26) include
crown blocks (26c) each demarcated by the crown circumferential grooves (24c) and the crown lateral grooves (62c), and
middle blocks (26m) each demarcated by the crown circumferential groove (24c), the shoulder circumferential groove (24s), and the middle lateral grooves (62m),
wherein the band (41) is present at least on an inner side of the crown lateral grooves (62c) in the tire radial direction and each outer edge (41e) in the tire width direction of the band (41) is located at least inward in the tire radial direction of an outermost side in the tire width direction of the shoulder circumferential grooves (24s),
**characterized in that** groove depths (CCD) of the crown circumferential grooves (24c), groove depths (SCD) of the shoulder circumferential grooves (24s), groove depths (MLD) of the middle lateral grooves (62m) and groove depths (CLD) of the crown lateral grooves (62c) are equal to each other,
the band cord, of the band (41), present on the inner side of the crown lateral grooves (62c) in the tire radial direction has a first cord density,
the band cord, of the band (41), present on the inner side in the tire radial direction from the outermost side in the tire width direction of the shoulder circumferential grooves (24s) to the outer edge (41e) in the tire width direction of the band (41) has a second cord density, and
the first cord density is higher than the second cord density.

2. The pneumatic tire (1, 2) according to claim 1, wherein the band (41) is present at least on the inner side of the crown blocks (26c) in the tire radial direction.

3. The pneumatic tire (1, 2) according to claim 1 or claim 2, wherein
the groove depths (CCD) of the crown circumferential grooves (24c) and groove depths of the middle lateral grooves (62m) are equal to each other, and
the band (41) is present at least on the inner side of the middle lateral grooves (62m) in the tire radial direction.

4. The pneumatic tire (1, 2) according to claim 3, wherein the band (41) is present at least on the inner side of the middle blocks (26m) in the tire radial direction.

5. The pneumatic tire (2) according to one of claims 1 to 4, wherein the band (41) has a boundary (41b) between the first cord density and the second cord density in the tire width direction.

6. The pneumatic tire (2) according to claim 5, wherein the boundary (41b) is located inward of the middle blocks (26m) in the tire radial direction.

7. The pneumatic tire (2) according to claim 5, wherein the boundary (41b) is located inward of the middle lateral grooves (62m) in the tire radial direction.

8. The pneumatic tire (2) according to one of claims 1 to 7, wherein the first cord density is not less than 1.2 times and not greater than 2 times the second cord density.

9. The pneumatic tire (1, 2) according to one of claims 1 to 8, wherein the groove depths (CLD) of the crown lateral grooves (62c) are not less than 15 mm and not greater than 30 mm.

10. The pneumatic tire (1, 2) according to one of claims 1 to 9, wherein a number of the crown lateral grooves (62c) present on a ground-contact surface of the tread (4) when the tread (4) comes into contact with a ground is not less than three and not greater than seven.

11. The pneumatic tire (1, 2) according to one of claims 1 to 10, wherein
the lateral grooves (62) further include shoulder lateral grooves (62s) each providing communication between the shoulder circumferential groove (24s) and an outermost side in the tire width direction of the tread (4), and
a radius R of a groove bottom of each of the shoulder lateral grooves (62s) is not less than 2.5 mm.

12. The pneumatic tire (1, 2) according to one of claims 1 to 11, wherein the pneumatic tire (1, 2) has an aspect ratio of not greater than 65%.

13. The pneumatic tire (1, 2) according to one of claims 1 to 12, wherein the crown lateral grooves (62c) each have a groove bottom projection (72, 72a, 72b).

## Patentansprüche

1. Luftreifen (1, 2), umfassend:
eine Lauffläche (4); und
ein Band (41), das sich in einer Reifenradialrichtung innen von der Lauffläche (4) befindet und einen spiralförmig gewickelten Bandkord umfasst, wobei
die Lauffläche (4) eine Vielzahl von Umfangsrillen (24), eine Vielzahl von Querrillen (62) und Blöcke (26) aufweist, die durch die Umfangsrillen (24) und die Querrillen (62) abgegrenzt sind,
die Umfangsrillen (24) umfassen
ein Paar Schulterumfangsrillen (24s), und
ein Paar Kronenumfangsrillen (24c), die sich in einer Reifenbreitenrichtung innen von der Schulterumfangsrillen (24s) befinden,
die Querrillen (62) umfassen
Kronenquerrillen (62c), die jeweils eine Verbindung zwischen dem Paar Kronenumfangsrillen (24c) bereitstellen, und
mittlere Querrillen (62m), die jeweils eine Verbindung zwischen der Schulterumfangsrille (24s) und der Kronenumfangsrille (24c) bereitstellen,
die Blöcke (26) umfassen
Kronenblöcke (26c), die jeweils durch die Kronenumfangsrillen (24c) und die Kronenquerrillen (62c) abgegrenzt sind, und
mittlere Blöcke (26m), die jeweils durch die Kronenumfangsrille (24c), die Schulterumfangsrille (24s) und die mittleren Querrillen (62m) abgegrenzt sind,
wobei das Band (41) zumindest auf einer Innenseite der Kronenquerrillen (62c) in der Reifenradialrichtung vorhanden ist und sich jede Außenkante (41e) in der Reifenbreitenrichtung des Bandes (41) zumindest in der Reifenradialrichtung innen von einer am weitesten außen liegenden Seite in der Reifenbreitenrichtung der Schulterumfangsrillen (24s) befindet,
**dadurch gekennzeichnet, dass** Rillentiefen (CCD) der Kronenumfangsrillen (24c), Rillentiefen (SCD) der Schulterumfangsrillen (24s), Rillentiefen (MLD) der mittleren Querrillen (62m) und Rillentiefen (CLD) der Kronenquerrillen (62c) gleich sind,
der Bandkord des Bandes (41), das auf der Innenseite der Kronenquerrillen (62c) in der Reifenradialrichtung vorhanden ist, eine erste Korddichte aufweist,
der Bandkord des Bandes (41), das auf der Innenseite in der Reifenradialrichtung von der am weitesten außen liegenden Seite in der Reifenbreitenrichtung der Schulterumfangsrillen (24s) zu der Außenkante (41e) in der Reifenbreitenrichtung des Bandes (41) vorhanden ist, eine zweite Korddichte aufweist, und
die erste Korddichte höher als die zweite Korddichte ist.

2. Luftreifen (1, 2) nach Anspruch 1, wobei das Band (41) zumindest auf der Innenseite der Kronenblöcke (26c) in der Reifenradialrichtung vorhanden ist.

3. Luftreifen (1, 2) nach Anspruch 1 oder Anspruch 2, wobei
die Rillentiefen (CCD) der Kronenumfangsrillen (24c) und Rillentiefen der mittleren Querrillen (62m) gleich sind, und
das Band (41) zumindest auf der Innenseite der mittleren Querrillen (62m) in der Reifenradialrichtung vorhanden ist.

4. Luftreifen (1, 2) nach Anspruch 3, wobei das Band (41) zumindest auf der Innenseite der mittleren Blöcke (26m) in der Reifenradialrichtung vorhanden ist.

5. Luftreifen (2) nach einem der Ansprüche 1 bis 4, wobei das Band (41) eine Grenze (41b) zwischen der ersten Korddichte und der zweiten Korddichte in der Reifenbreitenrichtung aufweist.

6. Luftreifen (2) nach Anspruch 5, wobei sich die Grenze (41b) in der Reifenradialrichtung innen von den mittleren Blöcken (26m) befindet.

7. Luftreifen (2) nach Anspruch 5, wobei sich die Grenze (41b) in der Reifenradialrichtung innen von den mittleren Querrillen (62m) befindet.

8. Luftreifen (2) nach einem der Ansprüche 1 bis 7, wobei die erste Korddichte nicht kleiner als das 1,2-fache und nicht größer als das 2-fache der zweiten Korddichte ist.

9. Luftreifen (1, 2) nach einem der Ansprüche 1 bis 8, wobei die Rillentiefen (CLD) der Kronenquerrillen (62c) nicht kleiner als 15 mm und nicht größer als 30 mm sind.

10. Luftreifen (1, 2) nach einem der Ansprüche 1 bis 9, wobei eine Anzahl der Kronenquerrillen (62c), die auf einer Bodenkontaktoberfläche der Lauffläche (4) vorhanden sind, wenn die Lauffläche (4) mit einem Boden in Kontakt kommt, nicht kleiner als drei und nicht größer als sieben ist.

11. Luftreifen (1, 2) nach einem der Ansprüche 1 bis 10, wobei
die Querrillen (62) ferner Schulterquerrillen (62s) umfassen, die jeweils eine Verbindung zwischen der Schulterumfangsrille (24s) und einer am weitesten außen liegenden Seite in der Reifenbreitenrichtung der Lauffläche (4) bereitstellen, und
ein Radius R eines Rillenbodens jeder der Schulterquerrillen (62s) nicht kleiner als 2,5 mm ist.

12. Luftreifen (1, 2) nach einem der Ansprüche 1 bis 11, wobei der Luftreifen (1, 2) ein Aspektverhältnis von nicht größer als 65 % aufweist.

13. Luftreifen (1, 2) nach einem der Ansprüche 1 bis 12, wobei die Kronenquerrillen (62c) jeweils einen Rillenbodenvorsprung (72, 72a, 72b) aufweisen.

## Revendications

1. Bandage pneumatique (1, 2) comprenant :
une bande de roulement (4) ; et
une bande (41) située à l'intérieur de la bande de roulement (4) dans une direction radiale du pneumatique et incluant un câblé de bande enroulé de manière hélicoïdale, dans lequel
la bande de roulement (4) a une pluralité de rainures circonférentielles (24),
une pluralité de rainures latérales (62), et des blocs (26) délimités par les rainures circonférentielles (24) et les rainures latérales (62),
les rainures circonférentielles (24) incluent
une paire de rainures circonférentielles d'épaulement (24s), et
une paire de rainures circonférentielles de couronne (24c) situées à l'intérieur des rainures circonférentielles d'épaulement (24s) dans une direction de la largeur du pneumatique,
les rainures latérales (62) incluent
des rainures latérales de couronne (62c) assurant chacune une communication entre la paire de rainures circonférentielles de couronne (24s), et
des rainures latérales médianes (62m) assurant chacune une communication entre la rainure circonférentielle d'épaulement (24s) et la rainure circonférentielle de couronne (24c),
les blocs (26) incluent
des blocs de couronne (26c) délimités chacun par les rainures circonférentielles de couronne (24c) et les rainures latérales de couronne (62c), et
des blocs médians (26m) délimités chacun par la rainure circonférentielle de couronne (24c), la rainure circonférentielle d'épaulement (24s), et les rainures latérales médianes (62m),
dans lequel la bande (41) est présente au moins sur un côté intérieur des rainures latérales de couronne (62c) dans la direction radiale du pneumatique et chaque bord extérieur (41e) dans la direction de la largeur du pneumatique de la bande (41) est situé au moins à l'intérieur dans la direction radiale du pneumatique d'un côté le plus à l'extérieur dans la direction de la largeur du pneumatique des rainures circonférentielles d'épaulement (24s),
**caractérisé en ce que** des profondeurs de rainure (CCD) des rainures circonférentielles de couronne (24c), des profondeurs de rainure (SCD) des rainures circonférentielles d'épaulement (24s), des profondeurs de rainure (MLD) des rainures latérales médianes (62m), et des profondeurs de rainure (CLD) des rainures latérales de couronne (62c) sont égales les unes aux autres,
le câblé de bande de la bande (41) présent sur le côté intérieur des rainures latérales de couronne (62c) dans la direction radiale du pneumatique a une première densité de câblé,
le câblé de bande de la bande (41) présent sur le côté intérieur dans la direction radiale du pneumatique depuis le côté le plus à l'extérieur dans la direction de la largeur du pneumatique des rainures circonférentielles d'épaulement (24s) jusqu'au bord extérieur (41e) dans la direction de la largeur du pneumatique de la bande (41) a une seconde densité de câblé, et
la première densité de câblé est plus élevée que la seconde densité de câblé.

2. Bandage pneumatique (1, 2) selon la revendication 1, dans lequel la bande (41) est présente au moins sur le côté intérieur des blocs de couronne (26c) dans la direction radiale du pneumatique.

3. Bandage pneumatique (1, 2) selon la revendication 1 ou 2, dans lequel les profondeurs de rainure (CCD) des rainures circonférentielles de couronne (24c) et des profondeurs de rainure des rainures latérales médianes (62m) sont égales les unes aux autres, et
la bande (41) est présente au moins sur le côté intérieur des rainures latérales médianes (62m) dans la direction radiale du pneumatique.

4. Bandage pneumatique (1, 2) selon la revendication 3, dans lequel la bande (41) est présente au moins sur le côté intérieur des blocs médians (26m) dans la direction radiale du pneumatique.

5. Bandage pneumatique (2) selon l'une des revendications 1 à 4, dans lequel la bande (41) a une frontière (41b) entre la première densité de câblé et la seconde densité de câblé dans la direction de la largeur du pneumatique.

6. Bandage pneumatique (2) selon la revendication 5, dans lequel la frontière (41b) est située à l'intérieur des blocs médians (26m) dans la direction radiale du pneumatique.

7. Bandage pneumatique (2) selon la revendication 5, dans lequel la frontière (41b) est située à l'intérieur des rainures latérales médianes (62m) dans la direction radiale du pneumatique.

8. Bandage pneumatique (2) selon l'une des revendications 1 à 7, dans lequel la première densité de câblé n'est pas inférieure à 1,2 fois et n'est pas supérieure à 2 fois la seconde densité de câblé.

9. Bandage pneumatique (1, 2) selon l'une des revendications 1 à 8, dans lequel les profondeurs de rainure (CLD) des rainures latérales de couronne (62c) ne sont pas inférieures à 15 mm et ne sont pas supérieures à 30 mm.

10. Bandage pneumatique (1, 2) selon l'une des revendications 1 à 9, dans lequel un nombre des rainures latérales de couronne (62c) présentes sur une surface de contact au sol de la bande de roulement (4) quand la bande de roulement (4) vient en contact avec un sol n'est pas inférieur à trois et n'est pas supérieur à sept.

11. Bandage pneumatique (1, 2) selon l'une des revendications 1 à 10, dans lequel
les rainures latérales (62) incluent en outre des rainures latérales d'épaulement (62s) assurant chacune une communication entre la rainure circonférentielle d'épaulement (24s) et un côté le plus à l'extérieur dans la direction de la largeur du pneumatique de la bande de roulement (4), et
un rayon R d'un fond de rainure de chacune des rainures latérales d'épaulement (62s) n'est pas inférieur à 2,5 mm.

12. Bandage pneumatique (1, 2) selon l'une des revendications 1 à 11, dans lequel le bandage pneumatique (1, 2) a un rapport d'aspect qui n'est pas supérieur à 65 %.

13. Bandage pneumatique (1, 2) selon l'une des revendications 1 à 12, dans lequel les rainures latérales de couronne (62c) ont chacune une projection de fond de rainure (72, 72a, 72b).
